# EUROPÄISCHE PATENTSCHRIFT

(11) **EP 2 129 568 B1**
(45) Veröffentlichungstag und Bekanntmachung des Hinweises auf die Patenterteilung: **22.09.2010**
(21) Anmeldenummer: 08714758.3
(22) Anmeldetag: 14.03.2008
(51) Int. Cl.: B62D 5/00, B62D 5/04

(54) **GETRIEBE FÜR FAHRZEUGLENKVORRICHTUNG**
GEAR ASSEMBLY FOR A VEHICLE STEERING DEVICE
TRANSMISSION POUR UN DISPOSITIF DE DIRECTION DE VÉHICULE

(30) Priorität: 28.03.2007 CH 499072007
(43) Veröffentlichungstag der Anmeldung: 09.12.2009
(73) Patentinhaber: ThyssenKrupp Presta Aktiengesellschaft, 9492 Eschen (LI)
(72) Erfinder: STROBEL, Joseph-Léon, FL-9493 Mauren (LI); GMUENDER, Ralf, CH-9050 Appenzell (CH); GALEHR, Robert, FL-9493 Mauren (LI)
(74) Vertreter: Wegmann, Urs
(86) Internationale Anmeldenummer: PCT/CH2008/000108
(87) Internationale Veröffentlichungsnummer: WO 2008/116331

(56) Entgegenhaltungen:
- EP-A- 0 931 714
- WO-A-2006/034921
- WO-A-2006/039825
- WO-A-2006/072186

## Beschreibung

Die Erfindung betrifft eine Fahrzeuglenkvorrichtung für Kraftfahrzeuge mit einem Antrieb zur Unterstützung der Lenkvorrichtung, der über eine Getriebeanordnung mit einer Abtriebswelle mit einem Lenkgetriebe verbunden ist.

Derartige Antriebe mit einem Getriebe werden in Fahrzeuglenkvorrichtungen eingesetzt für elektrisch unterstützte Lenkhilfen und für Drehzahlüberlagerungseinrichtungen.

Bei der elektrisch unterstützten Lenkhilfe wird eine Servokraft von einem Elektromotor mit nachgeschaltetem Untersetzungsgetriebe entsprechend dem Ausschlag des Lenkrades auf die Lenkwelle oder auf die querliegende Zahnstange des Lenksystemes eingekoppelt. Dadurch wird der Kraftaufwand am Steuerrad zur Lenkung des Fahrzeuges verringert. Es ist auch möglich mit Hilfe elektronischer Steuermittel, das Hilfskraftangebot zum richtigen Zeitpunkt und nach gewünschtem Verhalten bereitzustellen, beispielsweise auch entsprechend stärker bei stillstehendem Fahrzeug. Derartige elektrisch unterstützten Lenkhilfen werden deshalb heute vermehrt eingesetzt.

Ein weiterer wichtiger Einsatzbereich derartiger Elektromotor - Getriebeanordnungen in Lenksystemen betrifft insbesonders die Drehzahlüberlagerungseinrichtung mit Hilfsantrieb für ein Lenksystem für nicht spurgebundene Kraftfahrzeuge die, die Drehzahlen des Hilfsantriebes und der Steuereingriffe am Steuerrad durch den Fahrer überlagert und auf die Lenkbewegung der Räder überträgt.

Derartige Drehzahlüberlagerungseinrichtungen werden im Stand der Technik, soweit sie für Lenkungssysteme angewendet werden, auch als Drehwinkelüberlagerungseinrichtungen bezeichnet. Drehzahlüberlagerung bzw. Drehwinkelüberlagerung sind Synonyme.

Im Stand der Technik sind eine Reihe Systeme bekannt zur Ausbildung von elektrischen Hilfsantrieben mit Getriebeanordnung für den Einsatz in vorerwähnten Anordnungen.

Drehzahlüberlagerungsgetriebe werden oft auch durch ein Planetengetriebe oder auch durch ein Schneckenradgetriebe realisiert.

So ist in der DE19823721A1 eine derartige Drehzahlüberlagerungseinrichtung vorgestellt. Hier wird durch ein Steuerrad ein Gehäuse angetrieben, in dem sich Verzahnungen eines Hohlrades zweier Planetengetriebe befinden. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle verbunden. In der gezeigten Ausführungsform ist der Antrieb des Sonnenrades des ersten Planetengetriebes direkt durch den Rotor des Elektromotors realisiert. Durch eine entsprechende Ansteuerung des Elektromotors können die gewünschten Drehzahlüberlagerungen dargestellt werden. Diese im Stand der Technik gezeigte Lösung besitzt aber einige entscheidende Nachteile. Derartige Getriebe bestehen aus einer Vielzahl von Bauteilen. Es werden zwei Hohlzahnradkränze bzw. Planetengetriebe benötigt. Die Herstellung der Einzelteile ist sehr aufwändig und teuer. Die Vielzahl der Zahneingriffe führt zu sehr hohen Genauigkeitsanforderungen. Die inhärent vorhandene hohe Geräuschbildung derartiger Getriebe ist bei dieser Anwendung unerwünscht. Weiter muss die gesamte Einrichtung , inklusive Motorgehäuse, vom Fahrer beim Steuern mit gedreht werden. Ein weiterer Nachteil besteht zudem in der aufwendigen Einkopplung der elektrischen Energie für den Elektromotor.

In einem weiteren Stand der Technik, der DE19852447A1, wird eine Lösung zur Drehzahlüberlagerung vorgestellt, bei der ein Elektromotor über einen Schnekkenantrieb an das, als Planetengetriebe ausgebildete, Überlagerungsgetriebe angekoppelt ist. Hier ist die Getriebeeinheit karosseriefest angeordnet. Allerdings sind auch mit dieser Lösung eine Reihe von Nachteilen verbunden. Die Einrichtung benötigt viele Einzelteile, deren Herstellung aufwändig und teuer und die Anforderungen an die Herstelltoleranzen entsprechend hoch ist.

In der WO 2006/072186 A1 wird eine Drehzahlüberlagerungseinrichtung vorgestellt welche bereits recht kompakt ist und weniger Bauteile aufweist. Das Überlagerungsgetriebe besteht aus einer Zahnscheibe, die mit einer mit dem Steuerrad gekoppelten Antriebswelle verbunden ist und einer weiteren Zahnscheibe, die mit der Abtriebswelle verbunden ist wobei die beiden Zahnscheiben eine unterschiedliche Zähnezahl aufweisen und ein weiteres Zahnrad in beide Verzahnungen eingreift, welches an einem Rotor in sich um eine eigene Achse drehbar exzentrisch angeordnet ist, wobei der Rotor um die Wellenlängsachse von einem Hilfsantrieb angetrieben wird. Durch die Wahl der unterschiedlichen Zähnezahl kann das Übersetzungsverhältnis eingestellt werden.

Nachteil aller vorgenannten Beispiele aus dem Stand der Technik ist, dass ihr Betrieb mit einer erheblichen unerwünschten Geräuschbelastung verbunden ist.

Weiterhin offenbart die EP 0931714A eine Fahrzeuglenkvorrichtung für ein Kraftfahrzeug mit einem Antrieb, der über ein Kurvenscheibengetriebe mit einer Abtriebswelle mit der Längsachse mit einem Lenkgetriebe verbunden ist, wobei das Kurvenscheibengetriebe umfasst:
- mindestens eine um die Längsachse exzentrisch rotierbar angeordnete Kurvenscheibe mit einer wellenartigen Außenkontur;
- die mindestens eine Kurvenscheibe eine kreisrunde Zentralöffnung im Zentrum aufweist;
- die mindestens eine Kurvenscheibe mindestens zwei Bohrungen aufweist, die auf einem konzentrischen Teilkreis liegen, zwischen der Zentralöffnung und der Außenkontur;
- eine Rotorwelle mit der gemeinsamen Längsachse in einer Trägeranordnung gelagert angeordnet und diese mit dem Antrieb verbunden ist und mindestens einen Exzenter trägt mit einer Exzentrizität gegenüber der Längsachse, wobei jeder Exzenter in die Zentralöffnung einer zugeordneten Kurvenscheibe eingreift zur Erzeugung einer um die Längsachse rotierenden lateral taumelnden Bewegung der jeweiligen Kurvenscheibe;
- einen zweiten Träger angeordnet an der zweiten Welle, die als Abtriebswelle ausgebildet ist, die drehbar gelagert in der Trägereinrichtung um die Längsachse rotierbar ist, wobei an dem zweiten Träger in paralleler Richtung zur Längsachse radial beabstandet Außenbolzen angeordnet sind.

Die Aufgabe der vorliegenden Erfindung besteht darin, zumindest einige der Nachteile des Standes der Technik zu beseitigen. Es soll insbesondere eine kompakte Baugruppe mit einem Antrieb mit Getriebe für eine Lenkvorrichtung bereit gestellt werden, die vor allem ein geringes Laufgeräusch aufweist und mit wenigen und möglichst einfach herzustellenden Bauteilen realisiert werden kann.

Die Aufgabe wird erfindungsgemäss durch die Fahrzeuglenkvorrichtung mit einem Antrieb mit einer Kurvenscheibengetriebeanordnung entsprechend dem Anspruch 1 gelöst. Die abhängigen Patentansprüche 2 bis 14 betreffen bevorzugte Ausführungsformen der Fahrzeuglenkvorrichtung.

Dabei wird eine Fahrzeuglenkvorrichtung für ein Kraftfahrzeug vorgeschlagen, die einen Antrieb, der über ein Kurvenscheibengetriebe mit einer Abtriebswelle mit der Längsachse mit einem Lenkgetriebe verbunden ist enthält, wobei das Kurvenscheibengetriebe umfasst:
- mindestens eine um die Längsachse exzentrisch rotierbar angeordnete Kurvenscheibe mit einer wellenartigen Aussenkontur;
- die mindestens eine Kurvenscheibe eine kreisrunde Zentralöffnung im Zentrum aufweist;
- die mindestens eine Kurvenscheibe mindestens zwei Bohrungen aufweist, die auf einem konzentrischen Teilkreis liegen, zwischen der Zentralöffnung und der Aussenkontur;
- einen ersten Träger, angeordnet an einer ersten Welle, dessen Achse in der Längsachse liegt, wobei an dem ersten Träger in paralleler Richtung zur Längsachse Mitnahmebolzen angeordnet sind, welche in die Bohrungen der Kurvenscheibe eingreifen;
- eine Rotorwelle koaxial, drehbar um die erste Welle mit der gemeinsamen Längsachse gelagert, angeordnet und diese mit dem Antrieb verbunden ist und mindestens einen Exzenter trägt mit einer Exzentrizität gegenüber der Längsachse, wobei jeder Exzenter in die Zentralöffnung einer zugeordneten Kurvenscheibe eingreift zur Erzeugung einer um die Längsachse rotierenden lateral taumelnden Bewegung der jeweiligen Kurvenscheibe;
- einen zweiten Träger angeordnet an einer zweiten Welle, die als Abtriebswelle ausgebildet ist und dessen Achse in der Längsachse liegt und um diese rotierbar ist, wobei an dem zweiten Träger in paralleler Richtung zur Längsachse radial beabstandet Aussenbolzen angeordnet sind, an denen sich die wellenförmige Aussenkontur der mindestens einen Kurvenscheibe durch die exzentrische radial taumelnde Bewegung abwälzt.

Die Aussenbolzen, die am zweiten Träger angeordnet sind, können dabei sowohl am zweiten Träger befestigt sein, als auch von einer die Aussenbolzen umschliessenden umlaufenden, durchgehenden oder unterbrochenen, mit dem zweiten Träger verbundenen Innenkontur derart gehalten sein, dass die Kräfte, die beim Abwälzen der mindestens einen Kurvenscheibe auf die Aussenbolzen übertragen werden, über diese Innenkontur in den zweiten Träger eingeleitet werden.

Bevorzugt ist als Antrieb ein elektrischer Antrieb.

Dieses Kurvenscheibengetriebe kann als Untersetzungsgetriebe eingesetzte werden für den Einsatz in einer elektrisch unterstützten Lenkhilfe zur Einkopplung einer Servokraft in die Lenkvorrichtung abhängig vom Lenkradausschlag bzw. des erzeugten Steuersignals durch den Fahrerwunsch. Bei dieser Ausführungsform ist die erste Welle, an der der erste Träger angeordnet ist, an der Trägeranordnung fixiert und bildet eine Haltewelle, derart dass sie nicht drehen kann.

Bei der Ausbildung der Antriebsanordnung als Drehzahlüberlagerungsvorrichtung in einer Fahrzeuglenkvorrichtung wird die erste Welle, an der der erste Träger angeordnet ist, drehbar um die Längsachse mit Lagern gelagert angeordnet. Entsprechend ist der erste Träger in dieser Ausführungsform um die Längsachse rotierbar. Diese erste Welle ist als Antriebswelle ausgebildet, welche mit dem Steuerrad direkt oder indirekt zur Übertragung von Drehbewegungen verbunden ist. Bei Drehung des Lenkrades um einen bestimmten Winkel wird diese Antriebswelle am Kurvenscheibengetriebe entsprechend verdreht und die Abtriebswelle wird um einen gewünschten Winkel, dessen Grösse abhängig von der überlagerten Drehzahl des Elektromotors ist, verdreht. Entsprechend erfolgt eine Drehzahl- bzw. Drehwinkelüberlagerung zwischen der Eingangswelle und dem Rotor einerseits und der Abtriebswelle andererseits. Das hier vorgestellte Kurvenscheibengetriebe eignet sich besonders gut für den Einsatz in einer Drehzahlüberlagerungsvorrichtung einer Fahrzeuglenkvorrichtung, da dort der Effekt der Geräuschminderung besonders deutlich in Erscheinung tritt.

Kurvenscheibengetriebe können mit einer oder mehreren Scheiben ausgebildet werden. Die Scheiben sind, abgesehen von der Ausbildung von Nebenformelementen für andere Funktionen, wie Schmierung usw., hierbei vorzugsweise identisch. Sie weisen die gleichen wellenartigen Aussenkonturen auf und die gleiche Anzahl, Anordnung und Dimension der Bohrungen. Auch die zentrale Bohrung zur exzentrischen Führung im Zentrum der Scheibe ist identisch im Durchmesser und koaxial zur Scheibe angeordnet. Für jede Scheibe wird ein eigener Exzenter am Rotor des Antriebes vorgesehen. Somit wird jede Scheibe von einem zugeordneten Exzenter um die gleiche laterale Exzentrizität bewegt aber mit unterschiedlicher Phasenlage bzw. Winkellage in Drehrichtung. Bei der Verwendung von zwei Kurvenscheiben werden zwei Exzenter auf dem Rotor um einen Winkel von etwa 180° versetzt angeordnet verwendet. Bei der Verwendung von drei Kurvenscheiben werden drei Exzenter auf dem Rotor um einen Winkel von etwa je 120° versetzt angeordnet verwendet.

Der Winkel wird häufig nicht genau auf die 180°, 120° bzw. den Wert von 360° geteilt durch die Anzahl der Kurvenscheiben gelegt, damit zusätzliche Vorspannungen und/oder Entspannungen innerhalb des Getriebes erreicht werden. Werte von bis zu +/- 3° stellen übliche Werte für die Abweichung vom jeweiligen Nennwert dar und werden entsprechend mit "etwa" bezeichnet.

Der Aufbau mit zwei Kurvenscheiben und zwei Exzenter ist besonders günstig zu realisieren und bevorzugt, da der Aufbau einfach ist und verbunden mit guten gleichförmigen Laufeigenschaften bei geringen Laufgeräuschen.

Mit Vorteil werden derartige Kurvenscheiben durch Feinschneiden hergestellt. Dabei kann je nach Anforderung auf eine Nachbearbeitung der Bohrungen und der äusseren Kurvenkontur teilweise sogar verzichtet werden.

Es ist jedoch auch denkbar und möglich, die Kurvenscheiben aus lammellenartig zu einem Kurvenscheibenpaket zusammengefassten mehreren einzelnen gleichartigen Kurvenscheiben auf ein und demselben Exzenter anzuordnen. Jedes derartige Kurvenscheibenpaket wirkt dann genau wie eine einzelne Kurvenscheibe. Dieser Fall wird mit Vorzug angewendet zur Vereinfachung der Herstellung, wie sie beispielsweise durch die Begrenzung der Blechdicke im Fall der Feinschneidoperation gegeben ist. Weiter können durch entsprechende Verspannungen der einzelnen Lamellen Geräusche reduziert werden und die Kontaktsituation zu dem mit den Kurvenscheiben in Eingriff stehenden Getriebeelementen verbessert werden und Spiele reduziert werden.

Das Kurvenscheibengetriebe ermöglicht eine koaxiale Anordnung und die einfache Integration mit einem Elektromotor, vorzugsweise einem elektronisch kommutierten Elektromotor, was zu einer sehr wirtschaftlichen und kompakten Ausbildung der gesamten Antriebseinheit führt.

Die Aussenbolzen, an denen sich die wellenförmige Aussenkontur der Kurvenscheiben abwälzt, sind bevorzugt kreisrund und sind weiter bevorzugt zur Verringerung der Reibung um ihre eigene Achse drehbar gelagert, beispielsweise durch ein Gleit- oder Nadellager.

Es ist aber denkbar und möglich, die Aussenbolzen durch eine äussere Umfangskontur zu ersetzen, die die Oberflächenbereiche der Aussenbolzen, an denen die wellenförmige Aussenkontur der Kurvenscheiben im Falle der Ausführungsform mit den Aussenbolzen mit den Aussenbolzen in Kontakt steht, nachbildet. Die übrigen Oberflächenbereiche sollten dabei derart freigestellt ausgebildet sein, dass sie während des gesamten Umlaufs der Kurvenscheiben nicht in Kontakt mit der wellenförmigen Aussenkontur der Kurvenscheiben kommen. Diese alternative Ausführungsform wird mit Vorteil zu Erhöhung der Steifigkeiten angewendet, insbesondere bei hohen zu übertragenden Drehmomenten.

In einer vorteilhaften Weiterbildung der Erfindung wird in das Überlagerungsgetriebe eine Sicherheitskupplung bzw. eine Schaltung integriert, die im Fehlerfall oder besonderen Fahrzeugsituationen - wie beispielsweise Stromausfall, Ausfall der Steuerung oder ausgeschaltete Zündung usw. - eine direkte mechanische Kopplung zwischen An- und Abtriebswelle erzwingt, so dass der Fahrer die vollständige Kontrolle über das Lenkungssystem erhält. Die Kopplung kann beispielsweise in sehr einfacher Weise durch das Blockieren des Rotors des Hilfsantriebes in Bezug auf den Stator beziehungsweise das Gehäuse der Einrichtung erfolgen.

Entsprechend der vorgestellten Erfindung ist sowohl die Anordnung der Überlagerungseinrichtung und / oder der Lenkhilfe zwischen Lenkgetriebe und Steuerrad als auch zwischen Lenkgetriebe und Spurstange oder im Lenkgetriebe möglich. Die Auswahl erfolgt nach den jeweiligen Gegebenheiten des Bauraums und nach anderen technischen und kommerziellen Erfordernissen. Für den Fall, dass die Einrichtung zwischen Lenkgetriebe und Spurstange oder im Lenkgetriebe angeordnet ist, wird in der Regel die Abtriebswelle direkt mit einem Umwandlungsgetriebe zur Übersetzung einer Drehbewegung in eine Translationsbewegung verbunden sein. Beispielsweise wird hier direkt eine Kugelgewindemutter angetrieben.

Die Erfindung wird nun nachfolgend beispielsweise und mit schematischen Figuren für bevorzugte Ausführungsformen näher erläutert. Es zeigen:
- Fig. 1: Schematischer Aufbau eines Lenksystems mit Hilfskraftunterstützung;
- Fig. 2: Längsschnitt durch eine erste Ausführungsform entsprechend der Er- findung für eine Drehzahlüberlagerungseinrichtung mit einem Kurven- scheibengetriebe mit zwei Kurvenscheiben, kombiniert mit einem inte- griertem Elektromotor, alles koaxial angeordnet;
- Fig. 3: Anordnung gemäss Figur 2 in dreidimensionaler Darstellung;
- Fig. 4: ein Querschnitt durch das Kurvenscheibengetriebe mit zwei Kurven- scheiben hintereinander angeordnet;
- Fig. 5: eine Detailansicht der Abtriebswelle mit dem Träger für die Aussenbol- zen;
- Fig. 6: eine Detailansicht der Antriebswelle mit dem Träger für die Mitnehmer- bolzen;
- Fig. 7: dreidimensionale Darstellung einer ersten Kurvenscheibe im Detail;
- Fig. 8: dreidimensionale Darstellung einer zweiten (identischen) Kurvenschei- be im Detail von der anderen Seite in Bezug zur Ansicht in Fig. 7 gese- hen;
- Fig. 9: eine Rotorwelle mit daran angeordneten zwei um 180° versetzten Ex- zenter;
- Fig. 10: dreidimensionale Darstellung eines Überlagerungsgetriebes mit au- sserhalb angeordnetem Motor und zusätzlichem Schneckenradgetrie- be;
- Fig. 11: dreidimensionale Darstellung eines Überlagerungsgetriebes mit inner- halb des Gehäuse, koaxial angeordnetem Elektromotorantrieb entspre- chend der Ausführungsform, wie sie in den Figuren 2 und 3 gezeigt ist;
- Fig. 12: dreidimensionale Darstellung eines Überlagerungsgetriebes mit au- sserhalb angeordnetem Motor und Transmissionsantrieb;
- Fig. 13: eine Ausführungsform der Drehzahlüberlagerungseinrichtung mit ein- stellbarer Sicherheitskupplung in perspektivischer Darstellung;
- Fig. 14: eine Ausführungsform der Drehzahlüberlagerungseinrichtung mit einem Kurvenscheibengetriebe und einer einzelnen Kurvenscheibe mit ein- stellbarer Sicherheitskupplung im Längsschnitt und in perspektivischer Darstellung;
- Fig. 15: ein Längsschnitt durch eine weitere Ausführungsform entsprechend der Erfindung für eine elektrisch unterstützte Lenkhilfe mit einem Kurven- scheibengetriebe mit drei Kurvenscheiben, kombiniert mit einem inte- griertem Elektromotor, alles koaxial angeordnet;
- Fig. 16: eine alternative Ausführungsform für einen Träger für die Aussenbol- zen.

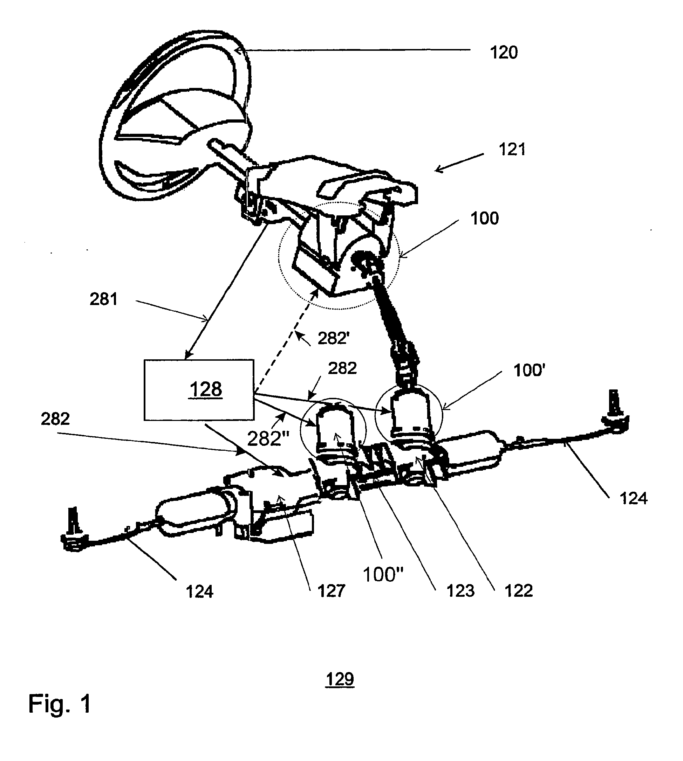

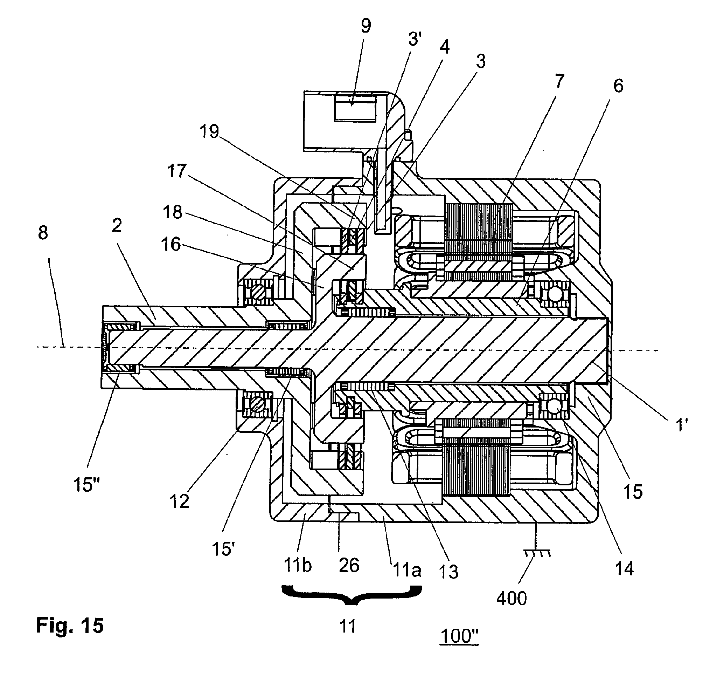

Der in Figur 1 gezeigte schematische Aufbau einer Lenkvorrichtung 129 als Lenkvorrichtung 129 mit elektrischer Hilfskraftunterstützung entspricht im Wesentlichen dem Stand der Technik. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Drehzahlüberlagerung dient die erfindungsgemäße Überlagerungseinrichtung 100, 100' oder 127. Dabei kann die Überlagerungseinrichtung 100' auch direkt in das Lenkgetriebe 122 integriert sein. Erfindungsgemäss kann die Einrichtung etwas modifiziert, wie sie detaillierter in Figur 15 dargestellt ist, auch als Hilfsantrieb 100" für eine elektrisch unterstützte Lenkhilfe ausgebildet sein, die ebenfalls im Bereich des Lenkgetriebes oder der Lenksäule angeordnet werden kann zur Einkopplung einer Hilfssteuerkraft.

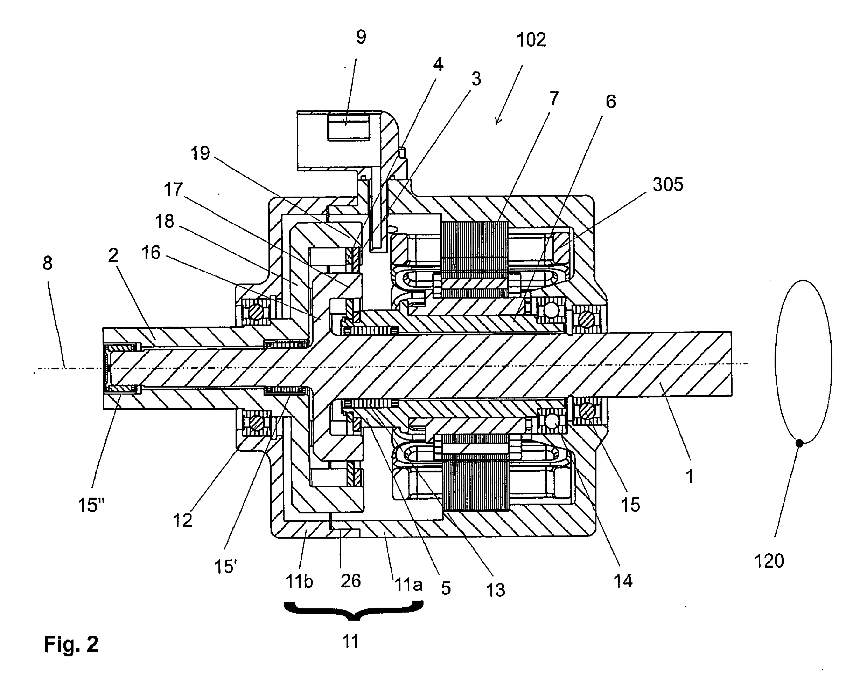

In der bevorzugten Ausführungsform befindet sich die Überlagerungseinrichtung zwischen Steuerrad 120 und Lenkgetriebe 122, beispielsweise an der mit 100 gekennzeichneten Stelle. In den Figuren 2, 3 und 14 ist diese Ausführungsform des Überlagerungsgetriebes 100 näher gezeigt.

In einer weiteren Ausführungsform wird die Überlagerungseinrichtung zwischen Lenkgetriebe 122 und Spurstangen 124 oder im Lenkgetriebe angeordnet. Die Überlagerungseinrichtung 127 enthält dann ein Umwandlungsgetriebe zur Übersetzung der Drehbewegung in eine Translationsbewegung, beispielsweise einen Kugelgewindetrieb oder eine Kugelgewindemutter.

In allen Ausführungsformen wird - im Normalfall - der Fahrerwunsch durch das Steuerrad 120 über eine hier nicht gezeigte Sensorik als Signal 281 in ein Steuergerät 128 eingespeist. Im Steuergerät 128 wird daraus, gegebenenfalls unter Zuhilfenahme eines Sensorsignals des Hilfsantriebes des Lenksystems (Signalleitung hier nicht dargestellt) und/oder der Drehzahlüberlagerungseinheit und weiterer den Fahrzeugzustand beschreibender Signale, die entsprechende Steuerspannung 282, 282', 282" für den Elektromotor bestimmt und an den Elektromotor, in der Überlagerungseinrichtung 100 bzw. 100' und / oder den Hilfsantrieb 100" für die elektrisch unterstützte Lenkhilfe ausgegeben.

Die Erfindung bezieht sich auf einen Hilfsantrieb 100" für die elektrisch unterstützte Lenkhilfe und vorzugsweise auf eine Überlagerungseinrichtung 100, 100' in der Anordnung in einem Lenksystem 129 für ein Kraftfahrzeug. Die erfindungsgemässe Überlagerungseinrichtung kann dabei in einem Lenksystem mit oder ohne Hilfskraftunterstützung eingesetzt sein. Neben dem Einsatz einer erfindungsgemässen Überlagerungseinrichtung ist es auch möglich eine eventuell vorhandene Hilfskraftunterstützung des Lenksystems hydraulisch, pneumatisch oder elektrisch, beispielsweise auch nach dem vorliegenden erfindungsgemässen Antriebskonzept, zu realisieren.

Das erfindungsgemässe Antriebssystem 100, 100', 100" für eine Fahrzeuglenkvorrichtung enthält einen vorzugsweise elektrischen Antrieb 101, 102, der über ein Kurvenscheibengetriebe 3, 4, 5, 16 bis 19 mit einer zweiten Welle, der Abtriebswelle 2 mit der Längsachse 8, mit einem Lenkgetriebe 122 verbunden ist, wobei das Kurvenscheibengetriebe folgende Elemente umfasst:
- mindestens eine um die Längsachse 8 exzentrisch rotierbar angeordnete Kurvenscheibe 3, 4 mit einer wellenartigen Aussenkontur 33, 34, wobei die mindestens eine Kurvenscheibe 3, 4 eine kreisrunde, koaxial angeordnete Zentralöffnung 30a, 30b im Zentrum aufweist und die mindestens eine Kurvenscheibe 3, 4 mindestens zwei Bohrungen 31 aufweist, die auf einem konzentrischen Teilkreis liegen, zwischen der Zentralöffnung 30a, 30b und der Aussenkontur 33, 34;
- einen ersten Träger 16, angeordnet an einer ersten Welle 1,1', dessen Achse in der Längsachse 8 liegt, wobei an dem ersten Träger 16 in paralleler Richtung zur Längsachse 8 Mitnehmerbolzen 17 angeordnet sind, welche in die Bohrungen 31 der Kurvenscheibe 3, 4 eingreifen;
- eine Rotorwelle 6 koaxial um die erste Welle 1, 1' mit der gemeinsamen Längsachse 8 drehbar angeordnet und diese mit dem Antrieb 101, 102 verbunden ist und mindestens einen Exzenter 5a, 5b trägt mit einer Exzentrizität 22 gegenüber der Längsachse 8, wobei dieser in die Zentralöffnung 30a, 30b einer zugeordneten Kurvenscheibe 3, 4 eingreift zur Erzeugung einer um die Längsachse 8 rotierenden lateral taumelnden Bewegung der mindestens einen Kurvenscheibe 3, 4;
- einen zweiten Träger 18 angeordnet an einer zweiten Welle 2, die als Abtriebswelle 2 ausgebildet ist und dessen Achse in der Längsachse 8 liegt und um diese rotierbar ist, wobei an dem zweiten Träger 18 in paralleler Richtung zur Längsachse 8 radial beabstandet Aussenbolzen 19 angeordnet sind, an denen sich die wellenförmige Aussenkontur 33, 34 der mindestens einen Kurvenscheibe 3, 4 durch die exzentrische radial taumelnde Bewegung abwälzt.

Diese Antriebsvorrichtung mit dem Kurvenscheibengetriebe kann sowohl für eine elektrisch unterstützte Lenkhilfe, wie auch für eine Drehzahlüberlagerungsvorrichtung mit Vorteil eingesetzt werden. Als Drehzahlüberlagerungseinrichtung ist die Anordnung besonders geeignet. Die Details der Erfindung werden nun Anhand der Figuren 2 bis 15 mit verschiedenen Ausführungsbeispielen im weiteren erläutert.

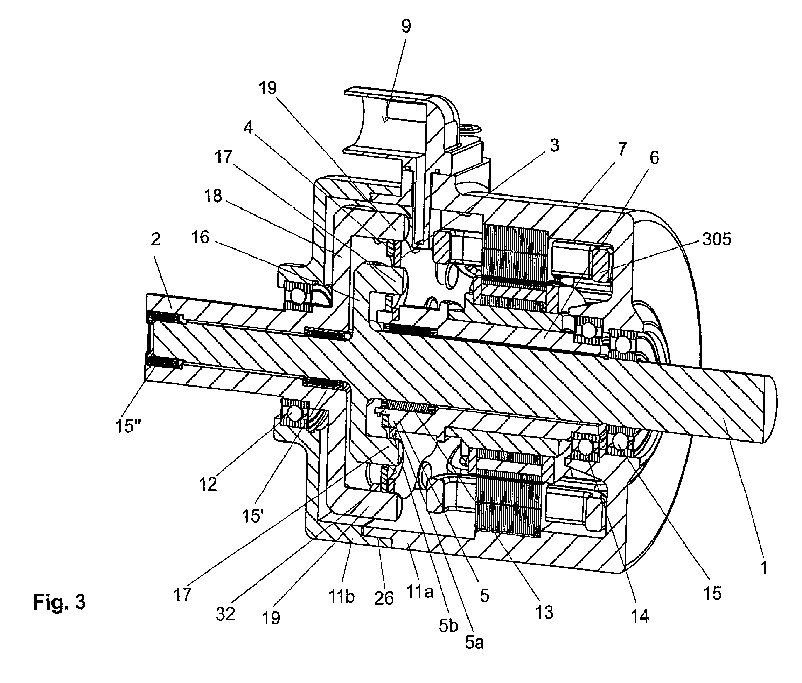

Die Überlagerungseinrichtung 100 weist eine Antriebswelle 1, die direkt oder indirekt vom Steuerrad 120 angetrieben wird, eine Abtriebswelle 2, die direkt oder indirekt die Spurstangen antreibt, eine Trägeranordnung 11, einen Hilfsantrieb, bevorzugt ein Elektromotor 6, 7, und ein Kurvenscheibengetriebe 3, 4, 5, 16, 17, 18, 19 auf, welches zwischen dem Elektromotor und der Abtriebswelle angeordnet ist. Die Drehzahlüberlagerungseinrichtung, wie in den Figuren 2 und 3 gezeigt umfasst folgende Komponenten:
- eine Antriebseinrichtung, hier die Antriebswelle 1, mit einer Drehachse 8;
- eine Abtriebseinrichtung, hier die Abtriebswelle 2, mit einer Drehachse 8;
- einen Hilfsantrieb 101, 102 der einen Rotor 6, mit einer Drehachse 8, antreibt;
- einer karosseriefesten Trägeranordnung, vorteilhaft als Gehäuse 11 ausgebildet, wie beispielsweise bestehend aus den mindestens zwei Gehäuseteilen 11a und 11b, die die Wellen 1, 2 und den Rotor 6 des Hilfsantriebs in

den Lagern 12, 15, 15', 15" bzw. 13, 14, wobei diese Gehäuseteile vorzugsweise mit einem Gewinde 26 verschraubbar sind;
- mindestens eine um die Längsachse 8 exzentrisch rotierbar angeordnete Kurvenscheibe 3, 4 mit einer wellenartigen Aussenkontur 33, 34, wobei die mindestens eine Kurvenscheibe 3, 4 eine kreisrunde, koaxial angeordnete Zentralöffnung 30a, 30b im Zentrum aufweist und, wobei auf einem konzentrischen Teilkreis der Scheiben, der zwischen der Zentralöffnung und der Aussenkontur liegt, sind mindestens zwei Bohrungen 31, vorgesehen sind;
- einen ersten Träger 16, drehfest angeordnet an der Antriebswelle 1, dessen Achse in der Längsachse 8 liegt und um diese rotierbar ist, wobei an dem ersten Träger 16 in paralleler Richtung zur Längsachse 8 Mitnehmerbolzen 17 angeordnet sind, welche in die Bohrungen 31 der Kurvenscheibe 3, 4 eingreifen und an den Innenflächen 32, 32' abwälzen bzw. abgleiten;
- einen zweiten Träger 18 angeordnet an einer zweiten Welle 2, die als Abtriebswelle 2 ausgebildet ist und dessen Achse in der Längsachse 8 liegt und um diese rotierbar ist, wobei an dem zweiten Träger 18 in paralleler Richtung zur Längsachse 8 radial beabstandet auf einem konzentrisch zur Längsachse liegenden Teilkreis Aussenbolzen 19 angeordnet sind, an denen sich die wellenförmige Aussenkontur 33, 34 der mindestens einen Kurvenscheibe 3, 4 durch die exzentrische radial taumelnde Bewegung abwälzt;
wobei der Rotor 6 koaxial drehbar um die Antriebswelle 1 und die gemeinsame Längsachse 8 gelagert angeordnet und mit dem Antrieb 101, 102 wirkverbunden ist und der Rotor 6 für jede Kurvenscheibe einen dieser zugeordneten Exzenter 5a, 5b mit einer Exzentrizität 22 gegenüber der Längsachse 8 trägt und der Exzenter in die Zentralöffnung 30a, 30b der zugeordneten Kurvenscheibe 3, 4 eingreift, um eine um die Längsachse 8 rotierenden lateral taumelnden Bewegung der zugeordneten mindestens einen Kurvenscheibe 3, 4 zu bewirken, wobei die Antriebs- und die Abtriebswelle 1,2 vorzugsweise in einer einzigen Längsachse mit einem Drehzentrum 8 angeordnet sind.

Als Äquivalent für die Drehübertragung zwischen der Antriebswelle 1 und der sich lateral taumelnd bewegenden Kurvenscheibe 3, 3', 4 vermittels der Bohrungen 31 und den Mitnehmerbolzen 17, kann die Drehübertragung auch über eine Oldham-Kupplung oder eine andere Exzentrizitäten ausgleichende Kupplung erfolgen.

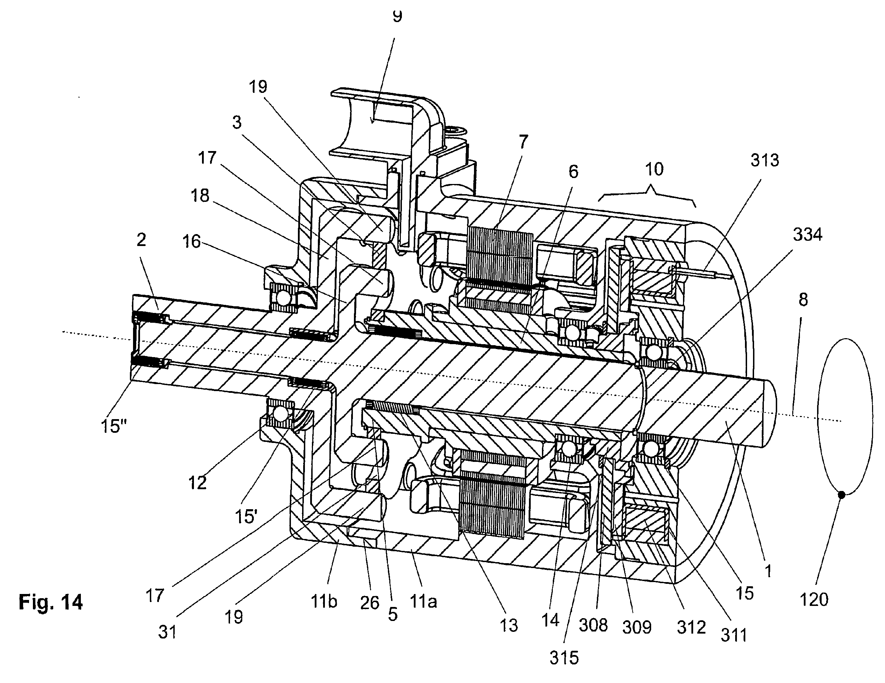

Das Kurvenscheibengetriebe kann mit einer einzelnen Kurvenscheibe 3, 4 oder aber auch mit mehreren Kurvenscheiben 3, 3', 4 ausgebildet werden. Die Ausführung mit zwei Kurvenscheiben, wie in den Figuren 2, 3 und 4 dargestellt, wird bevorzugt, da hierbei eine genügend starke Verminderung der Laufgeräusche auch bei noch einfacher Realisierung erreicht werden kann. In der Figur 14 ist beispielsweise eine Ausführung mit nur einer Kurvenscheibe 3 im Längsschnitt dargestellt. In der Figur 15 ist beispielsweise eine Ausführung mit drei Kurvenscheiben 3, 3' 4 im Längsschnitt dargestellt in der Darstellung für einen Hilfsantrieb 100" als elektrisch unterstützte Lenkhilfe.

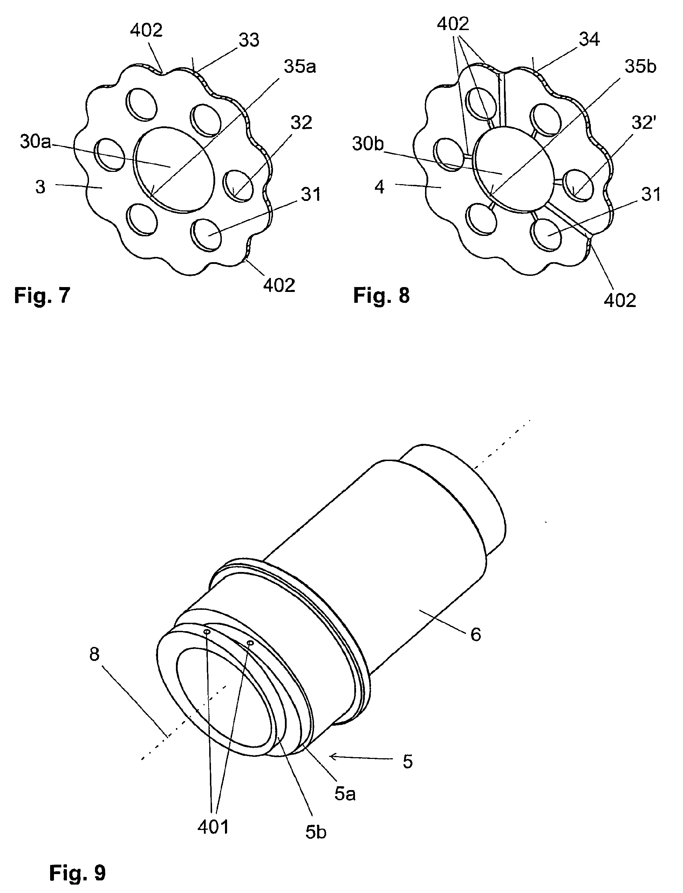

Eine erste Kurvenscheibe 3 ist in der Figur 7 in leicht schräger Sicht dargestellt. Die kreisrunde Kurvenscheibe 3 weist eine wellenartige Aussenkontur 33 auf an deren Fläche die Aussenbolzen 19 durch die exzentrische und rotierende Bewegung abgleitet. Die wellenartige Aussenkontur 33 ist als im Kreis geschlossener Kurvenzug ausgebildet mit sich periodisch wiederholenden Erhebungen und Senken, welche vorzugsweise einen stetigen, noch besser einen stetig differenzierbaren, Verlauf aufweisen. Entsprechend ist der Kurvenzug umfänglich geschlossen ausgebildet. Die gewählte Anzahl der Wellenperioden liegt vorzugsweise im Bereich von 6 bis 64 Perioden, wobei eine geradzahlige Anzahl zu bevorzugen ist.

Um einen gleichförmigen Bewegungsablauf zu erreichen, kann die Aussenkontur mindestens teilweise zykloidenförmig ausgebildet werden.

Im Zentrum der Kurvenscheibe 3 ist koaxial zum Scheibenzentrum eine Zentralöffnung 30a ausgebildet, in welcher ein zugehöriger Exzenter 5a, der auf dem-Rotor 6 angeordnet ist, eingreift, um die laterale Taumelbewegung zu erzeugen durch Abgleiten oder Rollen an der Gleitfläche 35a der Zentralöffnung 30a. Zusätzlich sind auf einem koaxialen Teilkreis zwischen der Zentralöffnung 30a und der Aussenfläche 33 mindestens zwei Bohrungen 31 in der Kurvenscheibe 33 vorgesehen. In den Figuren 7 und 8 sind 6 Bohrungen 31 dargestellt, um eine gleichförmige Aufteilung der Kräfte zu erreichen. Die Bohrungen 31 sind gleichmässig auf dem Teilkreisumfang verteilt angeordnet. Vorzugsweise liegt die Anzahl der Bohrungen im Bereich von 4 bis 24. Die Bohrungen 31 sind im Durchmesser um die Exzentrizität 22 des Exzenter 5a grösser als der Durchmesser der Mitnehmerbolzen 17. Die Mitnehmerbolzen 17 greifen in diese Bohrungen 31 ein und gleiten an deren Gleitflächen 32 ab. Dadurch ist es möglich, einerseits die Kurvenscheibe 3 um die Längsachse zu rotieren und lateral taumeln zu lassen.

Bei der Verwendung von mehr als einer Kurvenscheibe sind diese in der Ausbildung vorzugsweise völlig identisch. Eine zweite und identisch ausgebildete Kurvenscheibe 4 ist zur Verdeutlichung in der Figur 8 nochmals von der Rückseite dargestellt mit der Zentralöffnung 30b mit deren Gleitfläche 35b, der Aussenkontur 34 und den Bohrungen 31 mit deren Gleitflächen 32'. Für Nebenfunktionen, wie beispielsweise die Schmierung, können in den Kurvenscheiben Nuten 402 vorgesehen sein, wobei diese Nuten nicht in allen eingesetzten Kurvenscheiben eingebracht sein müssen.

In Figur 9 ist in dreidimensionaler Ansicht der Rotor 6 mit den Exzentern 5 dargestellt. Das Beispiel zeigt die bevorzugte Ausführung mit zwei darauf angeordneten Exzentern 5a, 5b welche in die Zentralöffnungen 30a, 30b von zwei Kurvenscheiben 3, 4 eingreifen. Die Exzenter 5a, 5b sind hier um 180° versetzt angeordnet. Bei Verwendung und drei Kurvenscheiben mit drei Exzentern werden diese um 120° versetzt angeordnet. Der Versetzungswinkel wird somit entsprechend der verwendeten Anzahl Kurvenscheiben innerhalb der 360° aufgeteilt. Die Form der Exzenter 5, die Exzentrizität 22, die Form der Aussenkurve 33 und deren Periodenzahl und die Aussenbolzen, sowie die Ausgestaltung der Bohrungen mit den Mitnehmerbolzen werden sorgfältig aufeinander abgestimmt, um den gewünschten ruhigen Gleichlauf zu erreichen bei entsprechend vorgegebenem Übersetzungsverhältnis. Zur Vereinfachung der Montage der Kurvenscheiben 3, 3', 4, können die einzelnen Exzenter 5a, 5b als separate Einzelteile an den Rotor 6 montierbar ausgebildet sein.

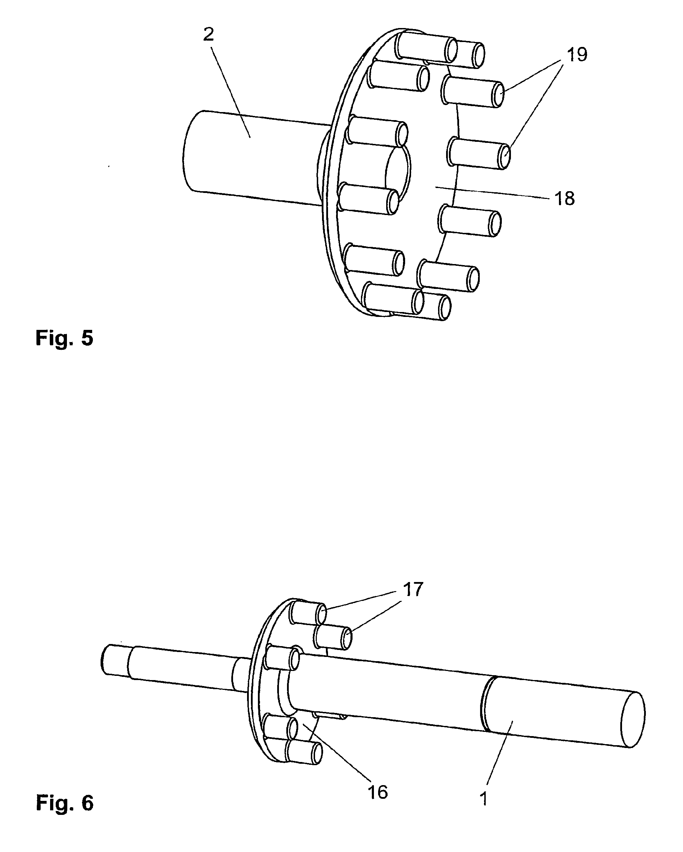

Eine erste Trägeranordnung für die Aufnahme der Mitnehmerbolzen 17 ist in der Figur 6 dargestellt. Die Antriebswelle 1 oder die Haltewelle 1', die in der Längsachse 8 angeordnet ist, ist drehfest mit einem scheibenförmigen ersten Träger 16 verbunden. An diesem Träger 16 sind radial beabstandet von der Antriebswelle auf einem Kreis gleichmässig verteilt Mitnehmerbolzen 17 angeordnet. Diese sind parallel zur Längsachse 8 ausgerichtet und greifen in zusammengebautem Zustand in die Bohrungen 31 der Kurvenscheiben ein. Bei mehreren Kurvenscheiben 3, 4 greift jeweils jeder Mitnehmerbolzen 17 durch die hintereinander liegenden Bohrungen 31 der mehreren Scheiben hindurch.

Die zweite Trägeranordnung für die Aufnahme der Aussenbolzen 19 ist in Figur 5 dargestellt. Die Abtriebswelle 2, die in der Längsachse 8 angeordnet ist, ist drehfest mit einem scheibenförmigen zweiten Träger 18 verbunden. An diesem Träger 18 sind radial beabstandet von der Antriebswelle auf einem Kreis gleichmässig verteilt Aussenbolzen 19 angeordnet. Diese sind parallel zur Längsachse 8 ausgerichtet und übergreifen die Aussenkontur 33 der Kurvenscheibe. Bei mehreren Kurvenscheiben 3, 4 übergreift jeweils jeder Aussenbolzen 19 die hintereinander angeordneten Aussenkonturen 33, 34 der Kurvenscheiben 3, 4. In diesem Fall sind die Wellenzüge der Aussenkonturen 33, 34 gegeneinander im Rahmen der bewegenden Exzentrizität versetzt, aber immer anliegend und abgleitend an den Aussenbolzen 19, derart dass diese Aussenbolzen 19 und somit die Abtriebswelle mit entsprechend untersetzter Drehzahl mit getrieben wird.

Die Aussenbolzen 19 und / oder die Mitnehmerbolzen 17 können sowohl als Gleitlagerteil ausgebildet werden, oder auch bevorzugt rollende Lager enthalten. Auch kann der oder die Exzenter mit einem Gleitlager oder vorzugsweise mit einem rollenden Lager versehen werden. Es kann jedoch aus Gründen des begrenzten Bauraums erforderlich sein, nur gleitende Kontakte, ohne spezielle Lagerungen, vorzusehen.

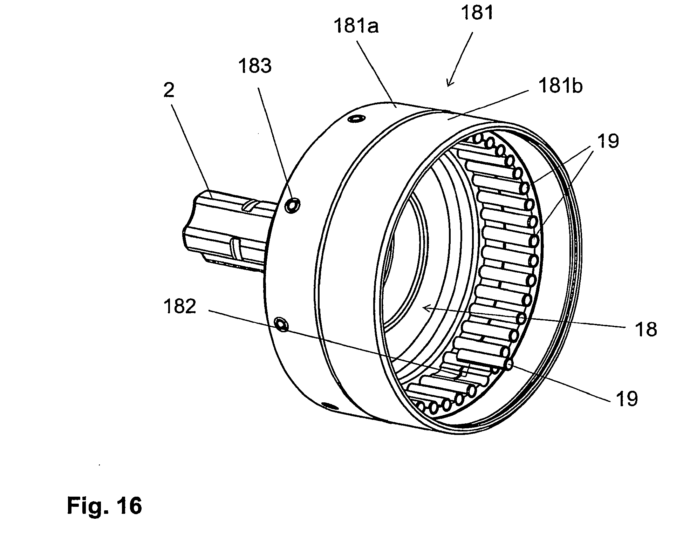

Entsprechend dem Ausführungsbeispiel der Figur 5 sind die Aussenbolzen 19 mit dem zweiten Träger verbunden. Dabei sind die Aussenbolzen im einfachsten Fall in Ausnehmungen des zweiten Trägers eingefügt und befestigt. Alternativ zu der in Figur 5 dargestellten Ausführungsform ist es denkbar und möglich, die erfindungsgemässe Lösung mit einem Träger, wie er in der Figur 16 veranschaulicht ist, darzustellen. Die Aussenbolzen 19 können entsprechend auch lose in ein Element 181 mit einer zur Längsachse gerichteten Innenkontur 182, das mit dem zweiten Träger 18 verbunden ist, eingelegt sein. In dieser Innenkontur sind die Aussenbolzen 19 sowohl in radialer Richtung nach aussen als auch in Umfangsrichtung gehalten. Das Element 181 wird über Befestigungselemente 183 mit dem zweiten Träger 18 verbunden. Zur Verringerung von Spielen, die aufgrund der Herstelltoleranzen auftreten können, kann das Element 181 auch in axialer Richtung geteilt, als erstes Element 181 a und zweites Element 181 b, ausgebildet sein und die beiden Teile zueinander in Umfangsrichtung verdreht angeordnet sein, um die Aussenbolzen 19 mit den Aussenkonturen 402 der Kurvenscheiben 3, 4 spielfrei in Kontakt zu bringen. Während der Montage erfolgt zur Einstellung des Laufspiels die entsprechende Verdrehung. Nach der Einstellung des Laufspiels werden die beiden Teile des Elements 181 fixiert, so dass das System eingestellt ist.

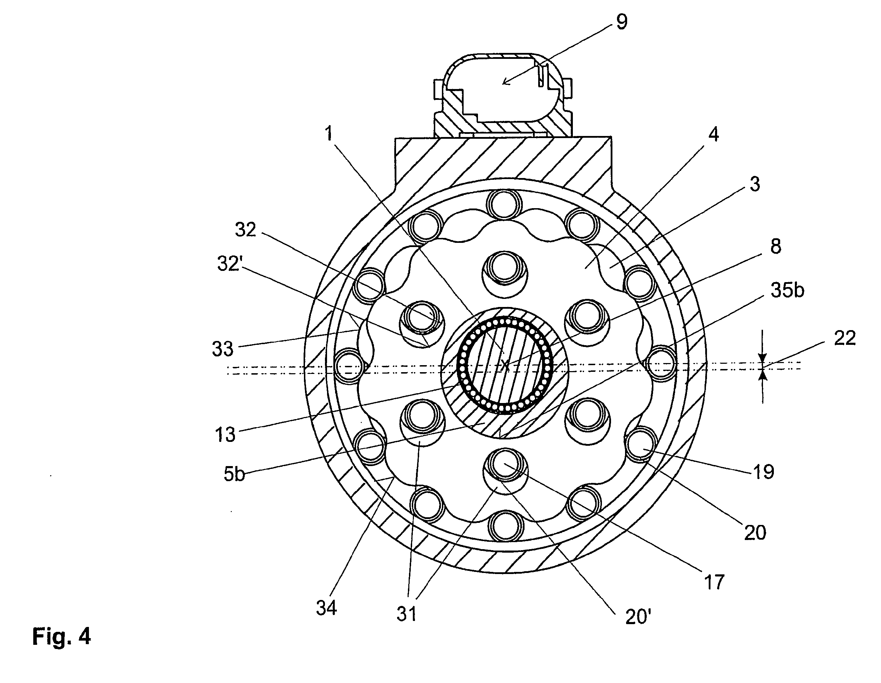

Die bevorzugte Ausbildung eines Kurvenscheibengetriebes mit zwei Kurvenscheiben 3, 4 ist im Querschnitt in Figur 4 dargestellt. Die erste Welle, die Antriebswelle 1 mit der sich im Zentrum befindenden Drehachse 8 ist um diese drehbar an der chassisfesten Trägeranordnung 11 gelagert angeordnet. Koaxial über der Antriebswelle 1 befindet sich ein Lager 13 zur drehbeweglichen Lagerung des Rotors 6. An diesem Rotor 6 sind, vorzugsweise an einem Ende des Rotorwellenstückes, zwei Exzenter 5a, 5b angeordnet. Aus der Figur 4 ist bei dieser Querschnittsdarstellung der zweite Exzenter 5b sichtbar, der in die Zentralöffnung 30a, 30b der zugehörigen zweiten Kurvenscheibe 4 eingreift und dort an dessen inneren Fläche 35a, 35b abgleitet oder abrollt. Der erste Exzenter 5a mit der ersten Kurvenscheibe 3 liegt unmittelbar hinter dem zweiten Exzenter 5b und ist deshalb nicht sichtbar in Figur 4. Die beiden Exzenter 5a, 5b sind um 180° in Rotationsrichtung versetzt auf dem Rotor 6 fixiert angeordnet. Die Exzenter 5a, 5b sind vorzugsweise als kreisrunde um die Exzentrizität 22 exzentrisch angeordnete Scheiben ausgebildet. Die beiden Kurvenscheiben 3, 4 mit den zugehörigen Aussenkonturen 33, 34 und den kreisförmig angeordneten Bohrungen 31 zwischen den Zentralöffnungen und den Aussenkonturen liegen lateral zur Zentralachse 8 um die Exzentrizität versetzt entsprechend der Lage der beiden Exzenter 5a, 5b. Die Mitnehmerbolzen 17 greifen durch die Bohrungen 31 in den Kurvenscheiben hindurch und gleiten bei Rotation um die Längsachse 8 und / oder durch die exzentrische Bewegung der Kurvenscheiben 3, 4 an den Innenflächen 32, 32' der Bohrungen 31 ab. Ein Mitnehmerbolzen 17 greift somit durch eine Bohrung 31 der ersten Kurvenscheibe 3 hindurch und gleichzeitig durch eine Bohrung 17 der dahinter liegenden zweiten Kurvenscheibe 4. Die Bohrungen 31 sind um die Exzentrizität 22 grösser als der Durchmesser der Mitnehmerbolzen 17, um den kontinuierlichen exzentrischen Lauf und Versetzung der Kurvenscheiben 3, 4 zu gewährleisten. Vorzugsweise werden an den Mitnehmerbolzen rollende Bolzenlager 32, 32' vorgesehen, die bei der exzentrischen Bewegung an den Gleitflächen 32, 32' der Bohrungen abrollen, um die Reibkräfte weiter zu verringern.

Durch die exzentrische Bewegung der Kurvenscheiben 3, 4 gleiten oder rollen die Wellenzüge der Aussenkonturen 33, 34 der beiden Kurvenscheiben 3, 4 an den kranzförmig um diese angeordneten Aussenbolzen 19 ab. Die Aussenbolzen 19 sind auf einem Teilkreis gleichmässig verteilt um das Drehzentrum 8 am zweiten Träger 18 angeordnet, der drehfest mit der Abtriebswelle 2 verbunden ist. Der radiale Abstand der Aussenbolzen 19 von der Drehachse 8, bzw. der Teilkreisdurchmesser, ist derart gewählt, dass die Aussenkonturen 33, 34 der Kurvenscheiben 3, 4 bei exzentrischer Rotationsbewegung immer jeweils die Bolzen 17 berühren. Auch hier können die Bolzen 17 als Gleitlager ausgebildet sein oder vorzugsweise mit rollenden Lagern 20, 20' versehen sein. Die Anzahl der Perioden, also der Erhebungen mit den Senken, des Wellenzuges der Aussenkontur 33, 34 der Kurvenscheiben 3, 4 ist jeweils um eins geringer als die Anzahl der Aussenbolzen 19. Im vorgestellten Beispiel in der Figur 4 weist der Wellenzug der beiden Kurvenscheiben elf Perioden auf, wobei an dem zweiten Träger 18 zwölf Aussenbolzen 19 angeordnet sind. Die Anzahl der Perioden der Aussenkontur 33, 34 der Kurvenscheiben 3, 4 bestimmt das Übersetzungsverhältnis des Kurvenscheibengetriebes. Bei dem hier dargestellten Beispiel muss die Rotorwelle 6 mit den Exzentern 5a, 5b elf mal gedreht werden um an der Abtriebswelle 2 eine Umdrehung zu erzielen. Das Übersetzungsverhältnis beträgt somit für diesen Fall 1:11. Für die Anwendung des vorgestellten Kurvenscheibengetriebes in einer Fahrzeuglenkvorrichtung werden mit Vorteil Übersetzungsverhältnisse, die im Bereich von 1:11 bis 1: 64 liegen vorgesehen.

Eine wesentlich bevorzugte Ausbildung der Drehzahlüberlagerungseinrichtung 100 weist einen in die Trägeranordnung 11 bzw. in ein Gehäuse 11a, 11b integrierten Elektromotorantrieb 102 auf, wie dies in den Figuren 2, 3 und 11 dargestellt ist. Der Elektromotor 102 ist hierbei mit Vorteil ein elektronisch kommutierter Motor und koaxial um die Längsachse 8 der Anordnung angeordnet. Der koaxial zu der Antriebswelle 1 mit den Lagern 13, 14 drehbar gelagerte Rotor 6 bildet hierbei gleichzeitig der Rotor 6 des Elektromotors 102, auf welchem Permanentmagnete angeordnet sind. Ein Stator 7 mit den Statorwicklungen 305 umgibt, gehäusefest angeordnet, den Rotor 6. Am Gehäuse 11 der Anordnung sind Anschlüsse 9 vorgesehen zum Anschluss der Motorspeisung und wahlweise für die Übertragung von Messsignale, wie beispielsweise eine oder mehrere der Drehzahlen der Antriebswelle 1, der Abtriebswelle 2 und/oder des Rotors 6 und / oder der Drehwinkelverstellung. Die Signale können dann an das Steuergerät 128 weitergeleitet werden, so dass daraus die Steuerung des Hilfsantriebes oder auch anderer hier nicht dargestellter Baugruppen im Fahrzeug, wie ein Antiblockiersystem, angesteuert wird. Diese integrierte Motoranordnung kombiniert mit dem Kurvenscheibengetriebe lässt sich besonders einfach und kompakt realisieren bei gutem Wirkungsgrad und geringer Geräuschentwicklung. Ein weiterer Vorteil der Anordnung besteht in der bevorzugten Ausführungsform darin, dass sich die Anordnung nicht mit dem Steuerrad 120 mit dreht und die Trägeranordnung 11 bzw. das Gehäuse 11 chassisfest am Chassis 400 bzw. am Fahrgestell des Fahrzeuges fixiert ist.

Ein weiterer wichtiger Vorteil der erfindungsgemässen Lösung besteht darin, dass die Trägeranordnung 11a, 11b bzw. das Gehäuse 11 nur eine Lagerungsfunktion für die Getriebeglieder übernimmt und nicht selbst eines der Getriebeglieder darstellt. Dadurch werden keine Impulse, durch den Kontakt der Getriebeglieder beim Eingriffswechsel unmittelbar auf das Gehäuse übertragen. Weiter ist es problemlos möglich das Gehäuse 11 aus schalldämmendem Material, wie beispielsweise aus mehreren Lagen von Blech und/oder Kunststoff, zu bilden. Entsprechend kann das Gehäuse mit schalldämmenden Zwischenelementen (beispielsweise Gummilager) am Chassis 400 befestigt werden.

Dieselben Vorteile können auch für die Ausführungsform der Erfindung, bei der das Antriebssystem 100" als elektrische Hilfskrafteinrichtung angewendet wird, und die Antriebswelle 1 als Haltewelle 1' ausgebildet ist, indem diese mit dem Gehäuse 11 oder einem Teil der Trägeranordnung 11a, 11b drehfest verbunden wird, erreicht werden, wie dies in der Figur 15 dargestellt ist.

Obwohl die integrierte Bauweise des Motorantrieb 102 kombiniert mit dem Kurvenscheibengetriebe bevorzugt ist, kann in gewissen Fällen der Betrieb des mit einem extern angeordneten Antrieb 101 sinnvoll sein.

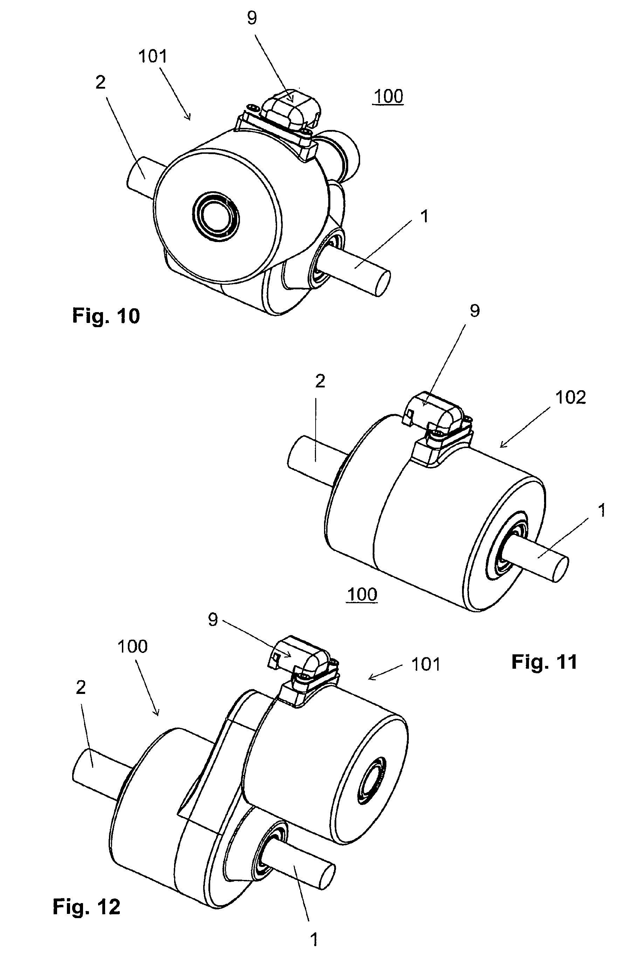

Eine Möglichkeit besteht beispielsweise darin, dass der Hilfsantrieb ein zusätzliches Getriebe mit Transmissionsmitteln aufweist, wie Riemen- oder Kettentrieb oder im Einzelfall Zahnradtrieb und über Räder den Rotor 6 der Drehzahlüberlagerungseinrichtung antreibt, wie dies in der Figur 12 dargestellt ist. Der Antrieb 101 kann hierbei ebenfalls, wie zuvor beschrieben, ausserhalb des Gehäuse 11 angekoppelt werden. Das Antriebsrad am Antrieb 101 wird mit Vorteil mit kleinerem Durchmesser ausgebildet als das Stirnrad, welches drehfest auf am Rotor 6 angeordnet , um eine weitere Übersetzung vorgeschaltet zum Kurvenscheibengetriebe zu realisieren. Es ist günstig für diesen Antrieb Riemen zu verwenden, vorzugsweise Zahnriemen, wodurch zusätzliche Geräuschentkopplungen möglich sind. Anstelle eines solchen Getriebe mit Transmissionsmitteln kann auch zwischen den externen Antrieb 101 und das Kurvenscheibengetriebe ein Schneckenradgetriebe geschaltet werden wie dies in der Figur 10 angedeutet ist.

Bei den zuvor beschriebenen Anordnungen des Kurvenscheibengetriebes mit ausserhalb des Gehäuse 11 angeordnetem Antriebsmotor 101 kann anstelle der bevorzugten Ausführung als elektronisch kommutierter Elektromotor, der Antrieb aufgrund der karosseriefesten Anordnung der Trägeranordnung 11 bzw. des Gehäuse 11, in sehr einfacher Weise auch als hydraulischer oder pneumatischer Antrieb ausgebildet sein, obwohl dann nicht mehr alle zuvor genannten Vorteile erreicht werden können.

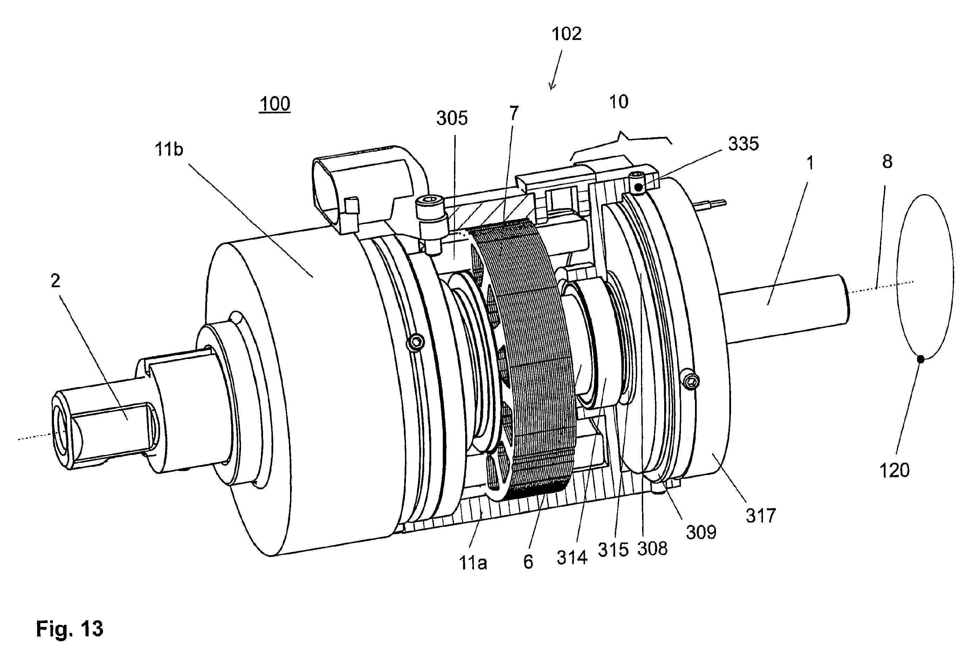

Eine weitere bevorzugte Ausführungsform der Drehzahlüberlagerungseinrichtung umfasst zusätzlich eine Sicherheitskupplung 10 oder eine Verriegelungseinrichtung, insbesondere bei der Ausführung mit integriertem Elektromotor 102 als Hilfsantrieb, wie dies in den Figuren 13 und 14 dargestellt ist.

Die Sicherheitskupplung 10 ist im Ausführungsbeispiel sehr einfach gestaltet, da durch den Aufbau der Drehzahlüberlagerungseinrichtung eine einfache Verriegelung des Gehäuses 11 mit dem Rotor 6 des Hilfsantriebes 102 ausreicht, um eine vollständige Kopplung der Drehzahl des Steuerrades 120 mit der Drehzahl der Abtriebswelle 2 und somit die vollständige Kontrolle des Fahrers über das Lenksystem, auch im Fehlerfall, zu gewährleisten. Im einfachsten Fall wird die Verriegelung durch einen Stift (in den Figuren nicht dargestellt), der in entsprechende Aussparungen am Rotor 6 eingreift realisiert. Durch das Übersetzungsverhältnis zwischen Abtriebsdrehzahl und Rotordrehzahl sind die Belastungen der Verriegelung nicht sehr gross, so dass es sogar möglich ist, die Verriegelung durch einen Reibschluss zwischen zwei Kontaktelementen 308, 309, wie beispielsweise Scheiben, herzustellen, welche im Fehlerfall gegeneinander bewegt werden. Eines der Kontaktelemente 308 ist über ein Kupplungselement 315 mit dem Rotor 6 verbunden und das andere Kontaktelement 309 ist gegenüber dem Gehäuse 11 drehfest angeordnet. Die Verriegelungseinrichtung kann kompakt, in einem weiteren Teilgehäuse 317 axial zur Überlagerungseinrichtung 100 angeordnet werden, und beispielsweise direkt anschliessend an den Elektromotorantrieb 102, mit Befestigungsmitteln 335, wie Verschraubungen fixiert werden.

Alternativ kann diese Verriegelungseinrichtung auch im extern angeordneten Hilfsantrieb 101 oder am Übertragungsgetriebe zwischen dem extern angeordnetem Hilfsantrieb 101 und dem Überlagerungsgetriebe angeordnet sein.

Eine weitere vorteilhaften Ausbildung einer kompakten Drehzahlüberlagerungsvorrichtung mit Kurvenscheibengetriebe, integriertem Elektromotor kombiniert mit einer elektromagnetisch betätigten einstellbaren Verriegelungseinrichtung ist im Detail in der Figur 14 im Längsschnitt dargestellt. Die Verriegelungseinrichtung 10 dient der wahlweisen drehfesten Kopplung zwischen Abtriebswelle 2 und Antriebswelle 1. Die Trägeranordnung 8 ist drehfest gegenüber der Karosserie 400 angeordnet. Der Rotor des Hilfsantriebes 305, 6, 7 umschliesst koaxial die Antriebswelle 1 und ist drehfest verbunden mit einem ferromagnetischen oder permanentmagnetischen ersten Kontaktelement 308. Die drehfeste Kopplung zwischen Abtriebswelle 2 und Antriebswelle 1 durch einen Reibschluss des ersten Kontaktelementes 308, das mit dem Rotor 6 drehfest verbunden ist, mit einem zweiten Kontaktelement 309, das drehfest mit der Trägeranordnung 8 verbunden ist, wird erzielt durch Zusammenpressen der beiden Elemente. Die für die Reibkraft erforderliche Anpresskraft wird durch eine magnetische Kraft erzeugt, wobei zumindest eines der beiden Kontaktelemente 308, 309 in Achsrichtung verschieblich ist.

Eines und/oder beide Kontaktelemente können mit Vorteil alternativ in allen Ausführungsformen Scheiben und /oder Elemente mit Flächenabschnitten sein, die mit korrespondierenden konischen oder gewölbten Oberflächen ausgebildet sind. Dadurch wird die Kontaktfläche bei gleichem Durchmesser erhöht und es kann auch eine Zentrierfunktion erzielt werden.

Die magnetische Anpresskraft wird im einfachsten Fall durch einen Permanentmagnet 311 erzeugt. Dabei kann der Permanentmagnet 311 als zylindrische Scheibe, deren Achse mit der Achse 8 der Antriebswelle 1 bzw. Abtriebswelle 2 zusammenfällt, ausgebildet sein. Es können aber auch mehrere einzelne Permanentmagnete auf eine zylindrische Scheibe aufgebracht sein. Im weiteren wird jede mögliche Ausführungsform der Einfachheit halber mit dem Permanentmagneten 311 bezeichnet.

Im Fall der Verriegelung sind die Kontaktelemente 308, 309 miteinander in Reibkontakt, wodurch der Rotor 6 gegenüber der Trägerstruktur 8 blockiert ist. Der Rotor 6 ist weiter mit dem Kurvenscheibengetriebe verbunden, die damit ebenfalls gegenüber der drehfest bezüglich der Karosserie angeordneten Trägerstruktur 8 blockiert ist. Somit wird das gesamte Drehmoment, das in die Antriebswelle 1 eingeleitet wird, auf die Abtriebswelle 2 übertragen. Entsprechend wird dabei die Drehzahl der Antriebswelle 1 auf eine Drehzahl an der Abtriebswelle 2 übertragen. Damit ist die Funktion der drehfesten Kopplung zwischen Antriebswelle 1 und Abtriebswelle 4 erzielt. Dieser Fall ist für den Notfall oder auch bei ausgeschaltetem Antriebsmotor des Kraftfahrzeuges wichtig. In diesem Betriebszustand hat der Fahrer die alleinige Kontrolle über die Steuerung der Fahrtrichtung und das Steuerrad ist mit den verschwenkten Rädern mechanisch miteinander gekoppelt. Das ist wichtig, in Fällen mangelnder Energieversorgung des Hilfsantriebes, wie etwa bei Stromausfall, oder auch bei Fehlfunktion der Ansteuerung des Hilfsantriebes. Zur Detektion derartiger Fehlfunktionen können beispielsweise Sensoren in die Drehzahlüberlagerungseinrichtung integriert sein, die eine Überwachung der verschiedenen Drehzahlen bzw. Drehwinkeln an Antriebswelle 1, Abtriebswelle 2 und Rotor 6 ermöglicht.

Im Fall der Entriegelung, bei dem die Drehzahlen bzw. Drehwinkel der Antriebswelle 1 und Abtriebswelle 2 zueinander veränderbar sein sollen, werden die Kontaktelemente 308, 309, bevorzugt durch einen kleinen Abstand zueinander, ausser Reibkontakt gebracht. Gleichzeitig wird der Hilfsantrieb mit Energie versorgt, so dass er die Abstützung des von der Antriebswelle 1 eingeleiteten Drehmoments übernimmt. Bedarfsweise wird der Rotor 6 durch den Hilfsantrieb in Drehung versetzt, um die entsprechende Drehzahl- bzw. Drehwinkelüberlagerung zwischen Antriebswelle 1 und Abtriebswelle 2 zu erreichen. Die Entriegelung soll bevorzugt durch einen Stromfluss bewirkt werden, während ohne diesen Stromfluss sich das System automatisch verriegelt. Dies wird dadurch erreicht, dass die magnetische Anpresskraft zwischen dem ersten und zweiten Kontaktelement durch ein elektrisch angesteuertes Gegenmagnetfeld aufhebbar ist. Im einfachsten Fall wird dieses Gegenmagnetfeld durch eine umlaufende Spule 312, die über einen elektrischen Anschluss 313 angesteuert wird, erzeugt. Die Spule 312 ist im Ausführungsbeispiel zwischen dem Permanentmagneten 311, die die magnetische Anpresskraft bewirken und der Kontaktscheibe 309 angeordnet. Ist die Spule 312 entsprechend bestromt, schliesst sich der magnetische Kreis zwischen dem Permanentmagneten 311, so dass auf die erste Kontaktscheibe 308 keine oder nur eine sehr geringe Anziehungskraft in Richtung der zweiten Kontaktscheibe 309 wirkt. Damit sinkt die Reibkraft zwischen den beiden Kontaktscheiben, die im Ausführungsbeispiel das Kontaktelement darstellt, so dass die Verriegelungseinrichtung 310 entriegelt ist. Bei Ausfall der Stromversorgung der Spule 312 bricht das Gegenmagnetfeld unmittelbar zusammen, so dass die Magnetkraft des Permanentmagneten 311 direkt auf die Kontaktscheibe 308 wirkt und diese an die Kontaktscheibe 309 heranzieht. Durch die Druckkraft einer in Fig. 14 angedeuteten Feder 334, die konzentrisch angeordnet ist, wird das Öffnen der Kupplung bevorzugt unterstützt, so dass das Offenhalten der Kupplung weniger Energie benötigt.

In einer Weiterbildung der Erfindung ist eine Schmierung des Getriebes vorgesehen. Hierzu sind in den Exzentern 5a, 5b radiale Bohrungen 401 vorgesehen, die einen Schmiermitteltransport ermöglichen. Dadurch werden die Kontaktflächen 35a, 35b der Zentralöffnung 30a, 30b und die Aussenflächen der Exzenter 5a, 5b sowie, falls vorhanden, dazwischen liegender Wälzkörper mit Schmiermittel versorgt. Denkbar und möglich ist es, in den Kurvenscheiben bzw. an deren Oberfläche einzelne oder mehrere Rinnen 402 zur Schmierung vorzusehen, um auch weiter aussen liegende Getriebekontakte mit Schmiermittel zu versorgen. Dies ist im Fall, dass die Kurvenscheiben aus lamellenartig zusammengefassten Paketen gebildet sind, besonders einfach und kostengünstig darstellbar.

Es ist offensichtlich, dass die in den verschiedenen Ausführungsformen der Erfindung einzeln dargestellten Merkmale, beispielsweise die Ausführung:
o mit einer, zwei, drei oder mehreren Kurvenscheiben,
o mit oder ohne Sicherheitskupplung,
o Ausführung als Hilfskraftantrieb oder als Überlagerungseinrichtung für die Fahrzeuglenkung
frei miteinander kombinierbar sind.

## Patentansprüche

1. Fahrzeuglenkvorrichtung für ein Kraftfahrzeug mit einem Antrieb (101, 102), der über ein Kurvenscheibengetriebe (3, 4, 5, 16, 17, 18,19) mit einer Abtriebswelle (2) mit der Längsachse (8) mit einem Lenkgetriebe (122) verbunden ist, wobei das Kurvenscheibengetriebe umfasst:
- mindestens eine um die Längsachse (8) exzentrisch rotierbar angeordnete Kurvenscheibe (3, 4) mit einer wellenartigen Aussenkontur (33, 34);
- die mindestens eine Kurvenscheibe (3, 4) eine kreisrunde Zentralöffnung (30a, 30b) im Zentrum aufweist;
- die mindestens eine Kurvenscheibe (3, 4) mindestens zwei Bohrungen (31) aufweist, die auf einem konzentrischen Teilkreis liegen, zwischen der Zentralöffnung (30a, 30b) und der Aussenkontur (33, 34);
- einen ersten Träger (16), angeordnet an einer ersten Welle (1, 1'), dessen Achse in der Längsachse (8) liegt, wobei an dem ersten Träger (16) in paralleler Richtung zur Längsachse (8) Mitnehmerbolzen (17) angeordnet sind, welche in die Bohrungen (31) der Kurvenscheibe (3, 4) eingreifen;
- eine Rotorwelle (6) koaxial drehbar um die erste Welle (1, 1') mit der gemeinsamen Längsachse (8) in einer Trägeranordnung (11, 11a, 11b) und an der ersten Welle (1, 1') gelagert angeordnet und diese mit dem Antrieb (101,102) verbunden ist und mindestens einen Exzenter (5a, 5b) trägt mit einer Exzentrizität (22) gegenüber der Längsachse (8), wobei jeder Exzenter (5a, 5b) in die Zentralöffnung (30a, 30b) einer zugeordneten Kurvenscheibe (3, 4) eingreift zur Erzeugung einer um die Längsachse (8) rotierenden lateral taumelnden Bewegung der jeweiligen Kurvenscheibe (3, 4);
- einen zweiten Träger (18) angeordnet an einer zweiten Welle (2), die als Abtriebswelle (2) ausgebildet ist, die drehbar gelagert in der Trägereinrichtung (11, 11a, 11b) um die Längsachse (8) rotierbar ist, wobei an dem zweiten Träger (18) in paralleler Richtung zur Längsachse (8) radial beabstandet Aussenbolzen (19) angeordnet sind, an denen sich die wellenförmige Aussenkontur (33, 34) der mindestens einen Kurvenscheibe (3, 4) durch die exzentrische radial taumelnde Bewegung abwälzt.

2. Fahrzeuglenkvorrichtung nach Anspruch 1, **dadurch gekennzeichnet, dass** alle Kurvenscheiben (3, 4) dieselbe wellenartige Aussenkontur (33, 34) mit gleichem Durchmesser aufweisen und die gleiche Anzahl Bohrungen (31) mit derselben Einteilung aufweisen, und dass die Mitnehmerbolzen (17) auf dem ersten Träger (16) jeweils durch diese Bohrungen (31) aller Scheiben (3, 4) hindurchgreifen.

3. Fahrzeuglenkvorrichtung nach einem der vorhergehenden Ansprüche, **dadurch gekennzeichnet, dass** im Fall, dass mehrere Kurvenscheiben (3, 3', 4) eingesetzt sind, deren Aussenkonturen (33, 34) mit wellenartigen Erhebungen und Vertiefungen zueinander versetzt angeordnet sind, derart dass die Aussenkonturen (33, 34) aller Kurvenscheiben (3, 4) an den Aussenbolzen (19) abwälzend anliegen.

4. Fahrzeuglenkvorrichtung nach einem der vorhergehenden Ansprüche, **dadurch gekennzeichnet, dass** für jede Kurvenscheibe (3, 3' 4) ein zugeordneter Exzenter (5a, 5b) vorgesehen ist und diese am Rotor (6) um einen Winkel verdreht angeordnet sind, dessen Wert etwa 360° geteilt durch die Anzahl der Exzenter (5a, 5b) bzw. die Anzahl der eingesetzten Kurvenscheiben (3, 3', 4) beträgt.

5. Fahrzeuglenkvorrichtung nach einem der vorhergehenden Ansprüche, **dadurch gekennzeichnet, dass** die Aussenbolzen (19) und / oder die Mitnehmerbolzen (17) an deren Oberfläche als Gleitlagerteil ausgebildet sind.

6. Fahrzeuglenkvorrichtung nach einem der vorhergehenden Ansprüche, **dadurch gekennzeichnet, dass** die Aussenbolzen (19) und / oder die Mitnehmerbolzen (17) rollende Lager tragen.

7. Fahrzeuglenkvorrichtung nach einem der vorhergehenden Ansprüche, **dadurch gekennzeichnet, dass** die wellenförmige Aussenkontur (33, 34) mindestens teilweise Zykloidenförmig ausgebildet ist.

8. Fahrzeuglenkvorrichtung nach einem der vorhergehenden Ansprüche, **dadurch gekennzeichnet, dass** das Kurvenscheibengetriebe genau zwei Kurvenscheiben (3, 4) aufweist.

9. Fahrzeuglenkvorrichtung nach einem der vorhergehenden Ansprüche, **dadurch gekennzeichnet, dass** der Antrieb (102) koaxial zur Längsachse (8) angeordnet ist und zusammen mit dem Kurvenscheibengetriebe und der Trägeranordnung (11) eine Baueinheit bildet.

10. Fahrzeuglenkvorrichtung nach Anspruch 9, **dadurch gekennzeichnet, dass** der Rotor (6) als Rotor des elektrischen Antriebes (102) ausgebildet ist, und dass der Antrieb (102) ein elektronisch kommutierter Elektromotor ist.

11. Fahrzeuglenkvorrichtung nach einem der vorhergehenden Ansprüche **dadurch gekennzeichnet, dass** die Trägeranordnung (11a, 11b) als Gehäuse (11) ausgebildet ist.

12. Fahrzeuglenkvorrichtung nach einem der vorhergehenden Ansprüche, **dadurch gekennzeichnet, dass** der Rotor (6) gegenüber der Trägeranordnung (11) mit einer Sicherheitsbremse (10) blockierbar ist.

13. Fahrzeuglenkvorrichtung nach einem der vorhergehenden Ansprüche, **dadurch gekennzeichnet, dass** die erste Welle (1) an der Trägeranordnung (11) drehbar um die Längsachse mit Lagern (15,15') gelagert angeordnet ist und als Antriebswelle (1) ausgebildet ist, welche mit einem Steuerrad (120) verbunden ist und das Kurvenscheibengetriebe zusammen mit dem Antrieb (101,102) eine Drehzahlüberlagerungsvorrichtung bildet.

14. Fahrzeuglenkvorrichtung nach einem der Ansprüche 1 bis 12, **dadurch gekennzeichnet, dass** die erste Welle (1') an der Trägeranordnung (11) nicht drehbar fixiert ist, die Trägeranordnung (11) am Chassis des Kraftfahrzeuges befestigt ist und das Kurvenscheibengetriebe zusammen mit dem Antrieb (101,102) eine elektrisch unterstützte Lenkhilfe bildet.

## Claims

1. Vehicle steering device for a motor vehicle with a drive (101, 102) that is connected via a cam disk gear (3, 4, 5, 16, 17, 18, 19) by an output shaft (2) at the longitudinal axis (8) with a steering gear (122), wherein the cam disk gear comprises:
- at least one cam disk (3, 4) arranged rotatable eccentrically about the longitudinal axis (8), with a wavy outer contour (33, 34);
- the at least one cam disk (3, 4) has a circular round central opening (30a, 30b) in the centre;
- the at least one cam disk (3, 4) has at least two bores (31) which lie on a concentric reference circle between the central openings (30a, 30b) and the outer contour (33, 34);
- a first carrier (16) arranged on a first shaft (1, 1'), the axis of which lies in the longitudinal axis (8), wherein on the first carrier (16) in the direction parallel to the longitudinal axis (8) are arranged carrier bolts (17) which engage in the bores (31) of the cam disk (3, 4);
- a rotor shaft (6) rotatable coaxially about the first shaft (1, 1') with the common longitudinal axis (8) in a carrier device (11, 11a, 11b) and arranged mounted on the first shaft (1, 1'), which shaft is connected with the drive (101, 102) and carries at least one cam (5a, 5b) with an eccentricity (22) in relation to the longitudinal axis (8), wherein each cam (5a, 5b) engages in the central opening (30a, 30b) of an allocated cam disk (3, 4) to generate a lateral tumbling motion for the cam disk (3, 4) concerned rotating about the longitudinal axis (8);
- a second carrier (18) arranged on a second shaft (2) that is formed as an output shaft (2) mounted rotatably in the carrier device (11, 11a, 11b) to rotate about the longitudinal axis (8), wherein radially spaced outer bolts (19) are arranged on the second carrier (18) in the direction parallel to the longitudinal axis (8), on which bolts rolls the wavy outer contour (33, 34) of the at least one cam disk (3, 4) under the eccentric radial tumbling motion.

2. Vehicle steering device according to claim 1, **characterised in that** all cam disks (3, 4) have the same wavy outer contour (33, 34) with the same diameter and the same number of bores (31) with the same pitch, and that the carrier bolts (17) on the first carrier (16) each protrude through these bores (31) on all plates (3, 4).

3. Vehicle steering device according to any of the preceding claims, **characterised in that** when several cam disks (3, 3', 4) are used, their outer contours (33, 34) with wavy protrusions and recesses are arranged offset to each other such that the outer contours (33, 34) of all cam disks (3, 4) lie rolling on the outer bolts (19).

4. Vehicle steering device according to any of the preceding claims, **characterised in that** for each cam disk (3, 3', 4) an allocated cam (5a, 5b) is provided and these are arranged on the rotor (6) twisted by an angle, the value of which is approximately 360° divided by the number of cams (5a, 5b) or the number of cam disks (3, 3', 4) used.

5. Vehicle steering device according to any of the preceding claims, **characterised in that** the outer bolts (19) and/or the carrier bolts (17) are formed as plain bearing parts on their surfaces.

6. Vehicle steering device according to any of the preceding claims, **characterised in that** the outer bolts (19) and/or the carrier bolts (17) carry rolling bearings.

7. Vehicle steering device according to any of the preceding claims, **characterised in that** the wavy outer contour (33, 34) is formed at least partly cycloidal.

8. Vehicle steering device according to any of the preceding claims, **characterised in that** the cam disk gear has precisely two cam disks (3, 4).

9. Vehicle steering device according to any of the preceding claims, **characterised in that** the drive (102) is arranged coaxial to the longitudinal axis (8), and forms a constructional unit together with the cam disk gear and the carrier device (11).

10. Vehicle steering device according to claim 9, **characterised in that** the rotor (6) is formed as the rotor of the electric drive (102) and that the drive (102) is an electronically commutated electric motor.

11. Vehicle steering device according to any of the preceding claims, **characterised in that** the carrier device (11a, 11b) is formed as a housing (11).

12. Vehicle steering device according to any of the preceding claims, **characterised in that** the rotor (6) can be blocked in relation to the carrier device (11) with a safety brake (10).

13. Vehicle steering device according to any of the preceding claims, **characterised in that** the first shaft (1) is arranged mounted on the carrier device (11) rotatable about the longitudinal axis with bearings (15, 15') and is formed as a drive shaft (1) which is connected with a control wheel (120) and the cam disk gear together with the drive (101, 102) forms a rotation speed superposition device.

14. Vehicle steering device according to any of claims 1 to 12, **characterised in that** the first shaft (1') on the carrier device (11) is not fixed rotatably, the carrier device (11) is attached to the chassis of the motor vehicle and the cam disk gear together with the drive (101, 102) forms an electrically supported steering aid.

## Revendications

1. Dispositif de direction de véhicule pour véhicule automobile comprenant un actionneur (101, 102) qui est connecté à un mécanisme de direction (122) par l'intermédiaire d'une transmission (3, 4, 5, 16, 17, 18, 19) à cames comprenant un arbre de sortie (2) à axe longitudinal (8), dans lequel la transmission à cames comprend:
- au moins une came (3, 4) à contour externe ondulé (33, 34) disposée à rotation de manière excentrique autour de l'axe longitudinal (8);
- la au moins une came (3, 4) comporte au centre une ouverture centrale circulaire (30a, 30b);
- la au moins une came (3, 4) comporte au moins deux alésages (31) ménagés sur un arc de cercle concentrique entre l'ouverture centrale (30a, 30b) et le contour externe (33, 34);
- un premier support (16), qui est disposé sur un premier arbre (1, 1') à axe coïncidant avec l'axe longitudinal (8), et sur lequel des broches d'entraînement (17) qui pénètrent dans les alésages (31) de la came (3, 4) sont disposées en direction parallèle à l'axe longitudinal (8);
- un arbre (6) de rotor qui est logé à paliers sur le premier arbre (1, 1') dans un dispositif support (11, 11a, 11b), coaxialement à l'axe longitudinal commun (8) et en rotation libre autour du premier arbre (1, 1'), et qui est connecté à l'actionneur (101, 102) et porte au moins un excentrique (5a, 5b) à excentricité (22) par rapport à l'axe longitudinal (8), chacun des excentriques (5a, 5b) pénétrant dans l'ouverture centrale (30a, 30b) d'une came associée (3, 4) pour communiquer à la came respective (3, 4) un mouvement de rotation autour de l'axe longitudinal (8) avec nutation latérale;
- un deuxième support (18) disposé sur un deuxième arbre (2) qui constitue l'arbre de sortie (2) qui est logé à paliers en rotation libre dans le dispositif support (11, 11a, 11b) en pouvant tourner autour de l'axe longitudinal (8), et qui porte des broches externes espacées radialement (19) disposées en direction parallèle à l'axe longitudinal (8) sur lesquelles le contour externe ondulé (33, 34) de la au moins une came (3, 4) roule sous l'effet du mouvement excentrique avec nutation radiale.

2. Dispositif de direction de véhicule selon la revendication 1, **caractérisé en ce que** toutes les cames (3, 4) présentent le même contour externe ondulé (33, 34) de même diamètre et comportent le même nombre d'alésages (31) répartis de la même manière, et **en ce que** les broches d'entraînement (17) disposées sur le premier support (16) pénètrent chacune à travers les alésages (31) de toutes les cames (3, 4).

3. Dispositif de direction de véhicule selon la revendication 1 ou 2, **caractérisé en ce que**, dans le cas où plusieurs cames (3, 3', 4) sont montées, leurs contours externes (33, 34) à crêtes et creux formant des ondulations sont disposés décalés les uns par rapport aux autres, d'une manière telle que les contours externes (33, 34) de toutes les cames (3, 4) reposent en roulant sur les broches externes (19).

4. Dispositif de direction de véhicule selon l'une quelconque des revendications précédentes, **caractérisé en ce qu'**un excentrique (5a, 5b) est associé à chaque came (3, 3', 4) et que ceux-ci sont disposés sur le rotor en étant décalés d'un angle dont la valeur est égale au quotient de 360° par le nombre des excentriques (5a, 5b), donc le nombre de cames montées (3, 3',4).

5. Dispositif de direction de véhicule selon l'une quelconque des revendications précédentes, **caractérisé en ce que** les surfaces des broches externes (19) et/ou des broches d'entraînement (17) consistent en fractions de paliers lisses.

6. Dispositif de direction de véhicule selon l'une quelconque des revendications précédentes, **caractérisé en ce que** les broches externes (19) et/ou les broches d'entraînement (17) portent des paliers roulants.

7. Dispositif de direction de véhicule selon l'une quelconque des revendications précédentes, **caractérisé en ce que** le contour externe ondulé (33, 34) est au moins partiellement en forme de cycloïde.

8. Dispositif de direction de véhicule selon l'une quelconque des revendications précédentes, **caractérisé en ce que** la transmission à cames comprend exactement deux cames (3, 4).

9. Dispositif de direction de véhicule selon l'une quelconque des revendications précédentes, **caractérisé en ce que** l'actionneur (102) est disposé coaxialement avec l'axe longitudinal (8) et constitue une unité modulaire avec la transmission à cames et le dispositif porteur (11).

10. Dispositif de direction de véhicule selon la revendication 9, **caractérisé en ce que** le rotor (6) est le rotor de l'actionneur électrique (102) et **en ce que** l'actionneur (102) est un moteur électrique à commutation électronique.

11. Dispositif de direction de véhicule selon l'une quelconque des revendications précédentes, **caractérisé en ce que** le dispositif porteur (11a, 11b) consiste en un boîtier (11).

12. Dispositif de direction de véhicule selon l'une quelconque des revendications précédentes, **caractérisé en ce que** le rotor (6) peut être bloqué par un frein de sécurité (10) par rapport au dispositif porteur (11).

13. Dispositif de direction de véhicule selon l'une quelconque des revendications précédentes, **caractérisé en ce que** le premier arbre (1) est logé à paliers sur le dispositif porteur (11) par des paliers (15, 15'), en rotation libre autour de l'axe longitudinal, et constitue un arbre de sortie (1) qui est connecté au volant de direction (120) et **en ce que** la transmission à cames forme, avec l'actionneur (101, 102) un dispositif de superposition de vitesses de rotation.

14. Dispositif de direction de véhicule selon l'une quelconque des revendications 1 à 12, **caractérisé en ce que** le premier arbre (1') est fixé sur le dispositif porteur (11) sans pouvoir tourner, que le dispositif porteur (11) est attaché sur le châssis du véhicule automobile et que la transmission à cames forme, avec l'actionneur (101, 102), une direction assistée électriquement.
